Europäisches Patentamt

European Patent Office

Office européen des brevets

(11) Veröffentlichungsnummer: **0 415 031 A2**

# EUROPÄISCHE PATENTANMELDUNG

(21) Anmeldenummer: 90112910.6

(22) Anmeldetag: 06.07.90

(51) Int. Cl.5: **H04M 9/10**

(30) Priorität: 31.08.89 DE 3928805

(43) Veröffentlichungstag der Anmeldung:
06.03.91 Patentblatt 91/10

(84) Benannte Vertragsstaaten:
AT BE CH DE DK ES FR GB GR IT LI LU NL SE

(71) Anmelder: HAGENUK GMBH
Westring 431
W-2300 Kiel 1(DE)

(72) Erfinder: Schönke, Herbert
Looper Weg 96
W-2353 Schülp/Nortorf(DE)

(74) Vertreter: Hansmann, Dierk, Dipl.-Ing.
Jessenstrasse 4
W-2000 Hamburg 50(DE)

(54) Schaltungsanordnung zur Unterdrückung elektrischer und/oder akustischer Rückkopplungen.

(57) Bei Fernsprech-Freisprecheinrichtungen zur Unterdrückung der Rückkopplungen werden Signale der beiden Sprechwege jeweils einem Spitzendetektor zugeführt, deren Ausgangssignale je einen Eingang eines Vergleichverstärkers beeinflussen. Der Vergleichsverstärker steuert mit seinem Ausgangssignal eine Dämpfungsschaltung nach Art einer Waage, welche in Abhängigkeit der Signale der Sprechwege einen Sprechweg dämpft und dem anderen maximale Verstärkung gestattet.

EP 0 415 031 A2

## SCHALTUNGSANORDNUNG ZUR UNTERDRÜCKUNG ELEKTRISCHER UND/ODER AKUSTISCHER RÜCK-KOPPLUNGEN

Die Erfindung bezieht sich auf eine Schaltungsanordnung zur Unterdrückung elektrischer und/oder akustischer Rückkopplungen in Fernsprech-Freisprecheinrichtungen, mit zwei von den Signalen der Sprechwege beaufschlagten Spitzendetektoren, deren Ausgänge jeweils mit einer RC-Parallelschaltung auf Bezugspotential bezogen sind und je einen Eingang eines Vergleichsverstärkers zum Erzeugen von Steuersignalen für eine Dämpfungsschaltung der Sprechwege ansteuern.

Schaltungsanordnungen dieser Art werden beispielsweise in Fernsprech-Freisprecheinrichtungen benutzt, um den jeweils inaktiven Sprechweg abzuschalten bzw. stark zu dämpfen. Die Entscheidung, welcher der Sprechwege zu dämpfen bzw. welcher nicht zu dämpfen ist, wird mit den von den Signalen der Sprechwege beaufschlagten Spitzendetektoren und dem auf die Dämpfungsschaltung einwirkenden Vergleichsverstärker vorgenommen. Als Spitzendetektoren werden invertierende Verstärker benutzt, welche durch zwei antiparallel geschaltete Dioden gegengekoppelt sind, und über eine CR-Reihenschaltung angesteuert werden. Die Ausgänge dieser Verstärker werden dann über Dioden auf eine auf Bezugspotential bezogene RC-Parallelschaltung und je einen Eingang des Vergleichsverstärkers geschaltet.

Beim Betrieb derartiger Schaltungen hat das Auftreten von Eingangssignalen an einem der Sprechwege eine schlagartige Aufladung des Kondensators der zugehörigen RC-Parallelschaltung am Eingang des Vergleichsverstärkers zur Folge, während bei Signalpausen eine langsame Entladung der Kondensatoren über die parallelen Widerstände erfolgt. Der Vergleichsverstärker vergleicht daher die an den Kondensatoren anliegenden Ausgangsspannungen der Spitzendetektoren und erzeugt ein Steuersignal zur Beeinflussung der Dämpfungsschaltung. Dieses Steuersignal ist positiv, wenn die Spannung am nichtinvertierenden Eingang des Vergleichsverstärkers größer ist als die am invertierenden Eingang. Ist dagegen die Spannung am invertierenden Eingang größer als die am nichtinvertierenden Eingang, dann wird das Steuersignal negativ. Mit dem Steuersignal wird somit in der nach Art einer Waage aufgebauten Dämpfungsschaltung eine definierte Dämpfung zwischen den Sprechwegen hin- und hergeschaltet, aber beim gleichzeitigen Auftreten von Signalen in den Sprechwegen entsteht eine Entscheidungsunsicherheit. Diese Entscheidungsunsicherheit führt zu einem die Sprechverbindung störenden Flattern.

Der Erfindung liegt daher die Aufgabe zugrunde, bei einer Schaltungsanordnung der eingangs genannten Art die Entscheidungsunsicherheit zu vermeiden. Diese Aufgabe ist gemäß der Erfindung durch die kennzeichnenden Merkmale des Anspruchs 1 gelöst.

Weiterbildung und vorteilhafte Ausgestaltungen der Erfindung sind durch die Merkmale der Ansprüche 2 bis 5 gekennzeichnet.

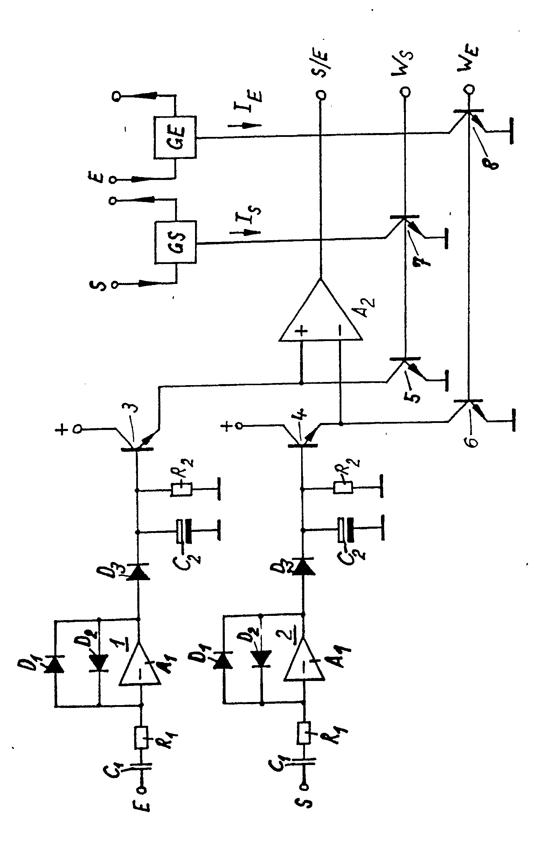

Die Erfindung wird anhand der beiliegenden Zeichnung näher erläutert.

In der Zeichnung ist eine Schaltungsanordnung zu sehen, in welcher die Signale zweier Sprechwege $S,E$ ($S$ = Sendewege, $E$ = Empfangswege) je einem Eingang eines Spitzendetektors $1,2$ zugeführt sind. Jeder Spitzendetektor $1,2$ besteht aus einer Eingangsreihenschaltung eines Kondensators $C_1$ und eines Widerstandes $R_1$, die zwischen der jeweiligen Eingangsklemme und dem invertierenden Eingang eines mit zwei antiparallel geschalteten Dioden $D_1,D_2$ gegengekoppelten Verstärkers $A_1$ liegt. Die Ausgänge beider Verstärker $A_1$ sind jeweils über eine Diode $D_3$ gleichzeitig auf die Basen je eines Emitterfolgertransistors $3,4$ und eine auf Bezugspotential bezogene Parallelschaltung eines Kondensators $C_2$ und eines Widerstandes $R_2$ geschaltet. Die Emitter beider Transistoren $3,4$ liegen jeweils an einem Eingang eines Vergleichsverstärkers $A_2$, und zwar in der Weise, daß das Signal des Empfangsweges $E$ den nichtinvertierenden Eingang und das Signal des Sendeweges $S$ den invertierenden Eingang des Vergleichsverstärkers $A_2$ ansteuern. Außerdem ist jeder Emitter der Transistoren $3,4$ mit den Kollektor je eines mit seinem Emitter an Bezugspotential liegenden Stromquellentransistoren $5,6$ verbunden. Die Kollektoren beider Transistoren $3,4$ liegen jeweils am positiven Potential der Betriebsspannung und daher sind die Signalwege für die Sprechsignale $S/E$ bis zum Vergleichsverstärker $A_2$ identisch. Jeder Basis-Emitter-Strecke der Stromquellentransistoren $5,6$ ist die Basis-Emitter-Strecke je eines weiteren Stromquellentransistors $7,8$ parallel geschaltet, deren Kollektoren zu stromgesteuerten Verstärkungszellen $GS$ bzw. $GE$ führen und mit den Strömen $I_S$ bzw. $I_E$ beaufschlagt sind. Für die Stromquellentransistoren $7,8$ können in einer Dämpfungswaage vorhandene Transistoren eingesetzt werden. Die stromgesteuerten Verstärkungszellen $GS,GE$ bilden mit den an den Basen der Transistoren $7,8$ anliegenden Steuersignalen $W_S,W_E$ einen Teil einer Dämpfungswaage, die in Abhängigkeit von Steuersignal $S/E$ des Vergleichsverstärkers $A_2$ und vom aktuellen Zustand einer nicht dargestellten Integratorschaltung entweder nur dem Sendesignal $S$ oder nur dem Empfangssignal $E$ die maximale Verstärkung erlauben. Zwischen beiden Schaltzuständen können Übergangszustände sowie eine Mittellage auftreten, bei der die Verstärkungszellen GS,GE mit gleichgroßer Teilverstärkung arbeiten.

Beim Betrieb der Schaltungsanordnung in einer Fernsprech-Freisprecheinrichtung verhält sich diese wie folgt:

Ist sowohl kein Empfangssignal E als auch kein Sendesignal S vorhanden, dann befindet sich die Dämpfungswaage in der Mittellage. Die Steuersignale $W_S$ und $W_S$ aus dieser Waage sind gleich groß, ebenso die Ströme $I_S$ und $I_E$ und als Folge davon sind auch die Verstärkungen der Verstärkungszellen GS,GE gleich groß. Die Kollektorströme der Stromquellentransistoren 5,6 sind ebenfalls gleich, so daß auch die Basis-Emitter-Spannungen der Emitterfolgertransistoren 3,4 gleich groß sind. In diesem Schaltzustand verhält sich der Vergleichsverstärker neutral und sein Steuersignal S/E wechselt in schneller Folge. Wenn aber ein niederfrequentes Empfangssignal E oder ein Sendesignal S auftritt, bewirkt dies ein definiertes Ausgangssignal am Ausgang des Vergleichverstärkers $A_2$ und daher wird nur einer Verstärkungszelle GE,GS die maximale Verstärkung gestattet.

Wenn die Dämpfungswaage die Mittellage verlassen hat, verhält sich die Schaltungsanordnung wie folgt. Nach dem Erkennen eines niederfrequenten Sendesignals wird das Steuersignal $W_S$ größer und das Steuersignal $W_E$ kleiner. Der Kollektorstrom des Stromquellentransistors 6 wird kleiner als der des Stromquellentransistors 5 und als Folge davon verlagert sich der Arbeitspunkt des Emitterfolgertransistors 4 auf einen niedrigeren Punkt der $U_{B/E}$-Kennlinie. Das hat zur Folge, daß die bereits durch das gleichgerichtete Sendesignal am Ausgang des Spitzendetektors 2, und zwar die am Kondensator $C_2$ vorhandene Steuerspannung durch den strombedingten Spannungsanstieg am Emitter des Emitterfolgertransistors 4 sich erhöht. Am Emitter des Emitterfolgertransistors 3 tritt dagegen eine Spannungsabsenkung auf, weil durch die Erhöhung des Kollektorstromes im Stromquellentransistor 5 die Spannung am Transistor 3 sinkt. Hierdurch wird die Schwelle des Spitzendetektors 2 für das Sendesignal S herabgesetzt und gleichzeitig die Schwelle des Spitzendetektors 1 für das Empfangssignal angehoben. Das bedeutet, daß nach dem Ansprechen eines Spitzendetektors und Verändern der Dämpfungswaage der aktive Sprechweg eine Mitkopplungswirkung erfährt, durch die von der Dämpfungswaage gesteuerten Stromquellentransistoren 5,6 eine Priorität erhalten, welche erst dann wider aufgehoben wird, wenn die Waage wieder die Mittellage einnimmt. Hierdurch wird erreicht, daß in Sprechpausen durch Restsignale auf dem inaktiven Sprechweg kein unerwünschtes Umschalten der Sprechrichtung erfolgt.

Vorteilhaft für die Betriebsweise der Schaltungsanordnung ist auch, daß lineare Stromänderungen der Stromquellentransistoren 5,6 logarithmische Spannungsänderungen an den Eingängen des Vergleichsverstärkers bewirken. Das bedeutet, daß die durch differentielle Ströme an den Eingängen des Vergleichsverstärkers $A_2$ erzeugte Offset-Spannung der logarithmischen Natur der Spitzendetektoren entspricht. Hierdurch ist sichergestellt, daß exponentielle Stromänderungen in der Dämpfungswaage zu einer linearen Änderung der Spannungsschwelle an den Eingängen der Spitzendetektoren führen. Das ist besonders dann vorteilhaft, wenn der Hub der Dämpfungswaage durch zusätzliche Steuergrößen beeinflußbar ist.

## Ansprüche

1. Schaltungsanordnung zur Unterdrückung elektrischer und/oder akustischer Rückkopplungen in Fernsprech-Freisprecheinrichtungen, mit zwei von den Signalen der Sprechwege beaufschlagten Spitzendetektoren, deren Ausgänge jeweils mit einer RC-Parallelschaltung auf Bezugspotential bezogen sind und je einen Eingang eines Vergleichsverstärkers zum Erzeugen von Steuersignalen für eine Dämpfungsschaltung der Sprechwege ansteuern, dadurch gekennzeichnet, daß den Eingängen des Vergleichsverstärkers ($A_2$) je ein Emitterfolgertransistor (3,4) vorgeschaltet ist, deren Kollektor-Emitter-Strecken mit je einer Kollektor-Emitter-Strecke eines an Bezugspotential liegenden Stromquellentransistors (5,6) in Reihe liegen, und daß den Basis-Emitter-Strecken dieser Stromquellentransistoren (5,6) jeweils eine Basis-Emitter-Strecke eines weiteren Stromquellentransistors (7,8) parallel geschaltet ist, deren Kollektoren an stromgesteuerten Verstärkungszellen (GS, GE) und deren Basen an Eingangssignalen (WE, WS) der Dämpfungsschaltung liegen.

2. Schaltungsanordnung nach Anspruch 1, dadurch gekennzeichnet, daß die Verstärkungszellen (GS,GE) einen Teil einer Dämpfungswaage bilden, die in Abhängigkeit vom Steuersignal (S,E) des Vergleichsverstärkers ($A_2$) und vom aktuellen Zustand einer Integratorschaltung entweder nur dem Sendesignal (S) oder dem Empfangssignal (e) die volle Verstärkung erlaubt.

3. Schaltungsanordnung nach Anspruch 1 oder 2, dadurch gekennzeichnet, daß für die von den Steuersignalen (WE,WS) der Dämpfungswaage gesteuerten Stromquellentransistoren (7,8) vorhandene Transistoren der Fernsprech-Freisprecheinrichtungen benutzt werden.

4. Schaltungsanordnung nach einem der Ansprüche 1 bis 3, dadurch gekennzeichnet, daß die Spitzendetektoren (1,2) jeweils aus einer CR-Reihens-

chaltung (C$_1$,R$_1$) und einem durch antiparallel geschaltete Dioden (D$_1$,D$_2$) gegengekoppelten invertierenden Verstärker (A ) mit nachgeschalteter Diode (D$_3$) bestehen.

5. Schaltungsanordnung nach einem der Ansprüche 1 bis 4, dadurch gekennzeichnet, daß die Kollektoren der Emitterfolgertransistoren (3,4) an positivem Potential der Betriebsspannung liegen.